**Europäisches Patentamt**

(19) **European Patent Office**

**Office européen des brevets**

(11) Veröffentlichungsnummer: **0 004 054**
**B1**

(12) # EUROPÄISCHE PATENTSCHRIFT

(45) Veröffentlichungstag der Patentschrift:
15.07.81

(51) Int. Cl.³: **H 04 B 3/14**

(21) Anmeldenummer: **79100649.7**

(22) Anmeldetag: **05.03.79**

(54) Schaltungsanordnung zur automatischen Entzerrung eines Signals.

(30) Priorität: **10.03.78 DE 2810504**

(43) Veröffentlichungstag der Anmeldung:
**19.09.79 Patentblatt 79/19**

(45) Bekanntmachung des Hinweises auf die Patenterteilung:
**15.07.81 Patentblatt 81/28**

(84) Benannte Vertragsstaaten:
**BE DE FR GB IT**

(56) Entgegenhaltungen:
**GB-A-713 224**
**GB-A-855 997**
**US-A-3 772 617**
**US-A-4 011 530**

(73) Patentinhaber: **SIEMENS AKTIENGESELLSCHAFT Berlin und München, Postfach 22 02 61, D-8000 München 22 (DE)**

(72) Erfinder: **Haass, Adolf, Eichelhäherstrasse 54, D-8000 München 60 (DE)**

## Schaltungsanordnung zur automatischen Entzerrung eines Signals

Die Erfindung bezieht sich auf eine Schaltungsanordnung zur automatischen Entzerrung eines Signals, das über eine Leitung mit Tiefpasscharakteristik übertragen wurde und einem Entzerrer mit regelbarem Hochpassfilter und einem Regelverstärker zugeleitet wird. Beispielsweise kann es sich um eine Zweidrahtleitung eines Ortskabels handeln.

Bekanntlich wird der Pegel eines Signals nach Übertragung über eine Leitung um so mehr erniedrigt, je länger die Leitung ist. Gleichzeitig werden alle Frequenzkomponenten und besonders die hohen Frequenzkomponenten des Signals um so mehr gedämpft, je länger die Leitung ist. Das Tiefpassverhalten der Leitung ist somit um so ausgeprägter, je länger die Leitung ist. Bekanntlich ist ein entzerrtes Signal erwünscht, dessen Pegel und dessen Frequenzcharakteristik konstant und unabhängig von der Länge der Leitung sind.

Zur automatischen Entzerrung eines Signals kann bekanntlich das zu entzerrende Signal über einen regelbaren Hochpass und über einen Regelverstärker übertragen werden, wobei in Abhängigkeit vom Ausgangssignal des Regelverstärkers eine Regelspannung abgeleitet wird, mit der sowohl das Hochpassverhalten des Hochpasses als auch die Verstärkung des Regelverstärkers derart geregelt werden, dass über den Ausgang des Regelverstärkers ein entzerrtes Signal abgegeben wird (z.B. Fig. 2 der GB-A-713 224). Bekannte Schaltungsanordnungen, die eine derartige automatische Entzerrung eines Signals bewirken, erfordern einen relativ grossen technischen Aufwand und einen grossen zeitlichen Aufwand, um die verschiedenen Regelkreise des Hochpasses und des Regelverstärkers aufeinander abzustimmen und an die Tiefpasscharakteristik der Leitung anzupassen.

Der vorliegenden Erfindung liegt die Aufgabe zugrunde, eine Schaltungsanordnung der eingangs genannten Art anzugeben, die keinen Abgleich erfordert.

Die der Erfindung zugrundeliegende Aufgabe wird gelöst durch die gleichzeitige Anwendung der folgenden Massnahmen:

A) Der Entzerrer enthält in einem ersten Zweig einen Hochpass vorgegebener Frequenzcharakteristik und ein dazu in Serie geschaltetes erstes Dämpfungsglied und enthält in einem zweiten Zweig einen Zweipol vorgegebener Frequenzcharakteristik; die Signale der beiden Zweige werden in einem Summierer summiert.

B) Der Regelverstärker besteht aus einem zweiten Dämpfungsglied und einem in Serie geschalteten Verstärker, der eine vorgegebene Verstärkung bewirkt.

C) Die Strom/Spannungscharakteristiken des ersten und des zweiten Dämpfungsgliedes sind weitgehend gleich und deren Dämpfung ist von einem Signal abhängig, das aus dem entzerrten Signal durch Gleichrichtung und Glättung abgeleitet wird.

Die erfindungsgemässe Schaltungsanordnung zeichnet sich dadurch aus, dass kein Abgleich der Regelsysteme des Hochpasses und des Regelverstärkers erforderlich ist. Dies deshalb, weil der Hochpass im ersten Zweig eine vorgegebene Charakteristik besitzt, weil der Verstärker des Regelverstärkers eine vorgegebene Verstärkung besitzt und weil die beiden Dämpfungsglieder gleiche Charakteristiken besitzen und mit dem gleichen Signal beeinflusst werden. Die Schaltungsanordnung zeichnet sich ferner durch grosse Temperaturstabilität aus, weil sich die beiden Dämpfungsglieder aufgrund ihrer gleichen Charakteristiken bei gegebenenfalls auftretenden Temperaturänderungen gleich verhalten. Die erfindungsgemässe Schaltungsanordnung ist auch weitgehend unabhängig von Änderungen der Versorgungsspannung, weil sich derartige Änderungen auf beide Dämpfungsglieder gleichartig auswirken. Ein weiterer Vorzug der erfindungsgemässen Schaltungsanordnung ist darin zu sehen, dass sie sich leicht an vorgegebene Leitungscharakteristiken anpassen lässt, weil nach derartigen Anpassungen kein Abgleich der beiden Dämpfungsglieder erforderlich ist.

Falls die Schaltungsanordnung mit besonders geringem technischen Aufwand realisiert werden soll, ist es zweckmässig, dass das erste Dämpfungsglied und das zweite Dämpfungsglied aus je zwei Richtleitern gebildet sind, dass die dem Verbindungspunkt der beiden Richtleiter abgewandten Elektroden an Pole einer Spannungsquelle angeschlossen sind, deren Potentiale zu einem Bezugspotential symmetrisch sind und an denen eine Spannungsdifferenz auftritt, die vom entzerrten Signal abhängig ist und dass die beiden Richtleiter in bezug auf die Spannungsquelle in Durchlassrichtung gepolt sind.

Falls die Tiefpasscharakteristik der Leitung im gewünschten Frequenzbereich besonders genau angenähert werden soll, ist es zweckmäsig, dass parallel zum zweiten Zweig ein dritter Zweig vorgesehen ist, in welchem ein weiterer Hochpass mit vorgegebener Frequenzcharakteristik in Serie mit einem weiteren Dämpfungsglied angeordnet ist, dass der dritte Zweig an den Summierer angeschlossen ist, der die über den ersten, zweiten und dritten Zweig übertragenen Signale summiert und dass die Strom/Spannungscharakteristik des dritten Dämpfungsgliedes weitgehend gleich den Strom/Spannungscharakteristiken des ersten und zweiten Dämpfungsgliedes ist und dessen Dämpfung vom Signal abhängig ist, das aus dem entzerrten Signal abgeleitet wird.

Falls die Tiefpasscharakteristik der Leitung nicht linear mit der Leitungslänge, sondern quadratisch zunimmt, ist es zweckmässig, dass im ersten Zweig in Serie zum Hochpass und zum ersten Dämpfungsglied ein zusätzlicher Hochpass und ein zusätzliches Dämpfungsglied angeordnet sind und dass die Strom/Spannungscharakteristik des zusätzlichen Dämpfungsgliedes weitgehend gleich der Strom/Spannungscharakteristik des ersten Dämpfungsgliedes ist und mit dem Signal gesteuert wird, das aus dem entzerrten Signal durch Gleichrichtung und Glättung abgeleitet wird.

Um die Spannungsquelle in rationeller Weise zu realisieren, ist es zweckmässig, dass die Spannungsquelle gebildet ist aus einem ersten und zweiten Operationsverstärker, aus einem weiteren Richtleiter, aus einem Kondensator und aus einem ersten, einem zweiten und einem dritten Widerstand, dass das entzerrte Signal über den weiteren Richtleiter einer Belegung des Kondensators und dem nichtinvertierenden Eingang des ersten Operationsverstärkers zugeführt ist, dass die andere Belegung des Kondensators und der nichtinvertierende Kanal des zweiten Operationsverstärkers mit einem Schaltungspunkt verbunden ist, an dem das Bezugspotential anliegt, dass parallel zum Kondensator der erste Widerstand geschaltet ist, dass der invertierende Kanal des ersten Operationsverstärkers an den Ausgang dieses ersten Operationsverstärkers und an eine der Elektroden der Richtleiter angeschlossen ist, dass der Ausgang des ersten Operationsverstärkers über einen zweiten Widerstand an den Eingang des invertierenden Kanals des zweiten Operationsverstärkers und von dort über den dritten Widerstand an den Ausgang des zweiten Operationsverstärkers angeschlossen ist und dass der Ausgang des zweiten Operationsverstärkers an die Elektrode des anderen Richtleiters angeschlossen ist.

Im folgenden werden Ausführungsbeispiele anhand der Fig. 1 bis 12 beschrieben, wobei in mehreren Figuren dargestellte gleiche Gegenstände mit gleichen Bezugszeichen bezeichnet sind.

Es zeigen:

Fig. 1 eine Schaltungsanordnung zur automatischen Entzerrung eines Signals in prinzipieller Darstellung,

Fig. 2 eine weitere Schaltungsanordnung zur automatischen Entzerrung eines Signals in prinzipieller Darstellung,

Fig. 3 ein erstes Ausführungsbeispiel der in Fig. 1 dargestellten Dämpfungsglieder,

Fig. 4 einige Tiefpasscharakteristiken verschiedener Leitungen,

Fig. 5 einige Übertragungscharakteristiken entsprechend den in Fig. 3 dargestellten Tiefpasscharakteristiken,

Fig. 6 ein Ausführungsbeispiel der in Fig. 1 dargestellten Schaltungsanordnung unter Verwendung mehrerer Dioden als Richtleiter,

Fig. 7 ein weiteres Ausführungsbeispiel der in Fig. 1 dargestellten Schaltungsanordnung unter Verwendung mehrerer Transistoren als Richtleiter,

Fig. 8 eine prinzipielle Darstellung einer Schaltungsanordnung zur Entzerrung eines Signals, das über eine Leitung mit besonders nichtlinearer Tiefpasscharakteristik übertragen wurde,

Fig. 9 einige Verstärkercharakteristiken, betreffend die Wirkungsweise der in Fig. 8 dargestellten Schaltungsanordnung,

Fig. 10 eine prinzipielle Darstellung einer Schaltungsanordnung zur Entzerrung eines Signals, das über eine Leitung mit quadratisch zunehmender Tiefpasscharakteristik übertragen wurde,

Fig. 11 Verstärkercharakteristiken, betreffend die Arbeitsweise der in Fig. 10 dargestellten Schaltungsanordnung und

Fig. 12 ein Ausführungsbeispiel der in den Fig. 6 und 7 schematisch dargestellten Spannungsquelle.

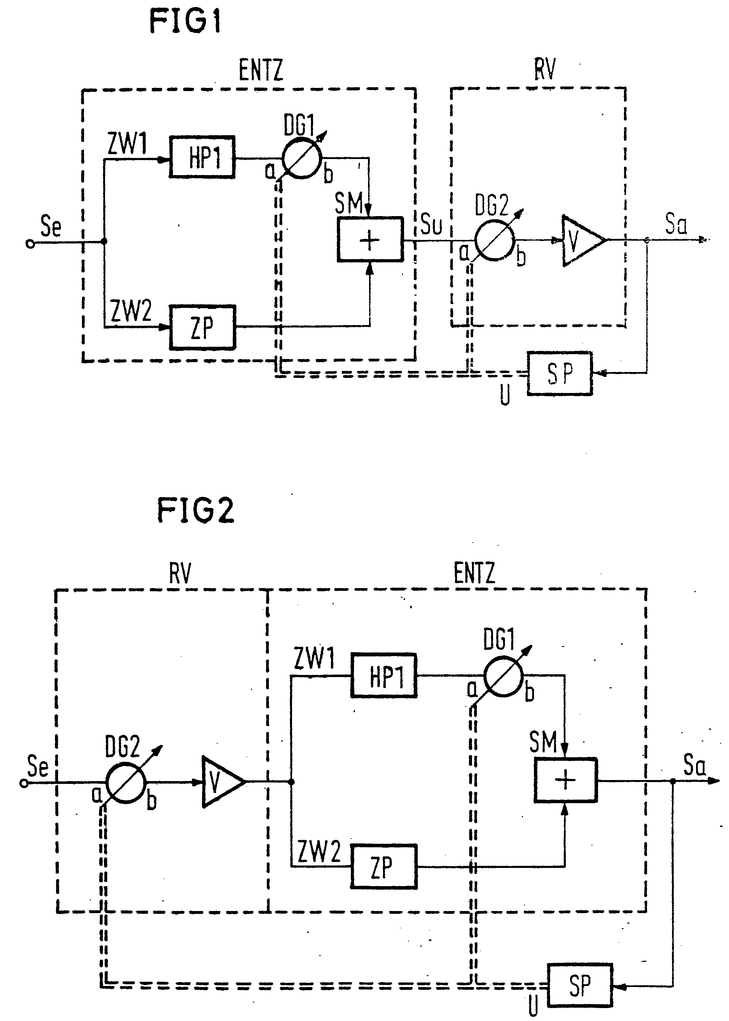

Fig. 1 zeigt eine Schaltungsanordnung zur Entzerrung des eingangs zugeführten Signals Se. Es wird angenommen, dass dieses Signal Se über eine Leitung mit Tiefpasscharakteristik übertragen wurde. Die dargestellte Schaltungsanordnung besteht aus dem Entzerrer ENTZ, aus dem Regelverstärker RV und aus der Spannungsquelle SP. Über den Ausgang des Regelverstärkers wird das entzerrte Signal Sa abgegeben.

In einen ersten Zweig ZW1 des Entzerrers sind der Hochpass HP1 und das Dämpfungsglied DG1 in Serie angeordnet. Die Charakteristik des Hochpasses HP1 wird nicht geändert, wogegen die Charakteristik des Dämpfungsgliedes DG1 mit Hilfe des Signals U beeinflusst wird. In einem zweiten Zweig ZW2 ist der Zweipol ZP angeordnet, der eine vorgegebene Frequenzcharakteristik besitzt. Es kann sich bei diesem Zweipol ZP beispielsweise um einen ohmschen Widerstand handeln. Die Frequenzcharakteristik dieses Zweipols wird jedoch mit dem Signal U nicht beeinflusst. Der erste und der zweite Zweig münden in den Summierer SM, der das Summensignal Su abgibt.

Der Regelverstärker RV enthält das Dämpfungsglied DG2, dessen Dämpfung mit Hilfe des Signals U geregelt wird und enthält ausserdem den Verstärker V, dessen Verstärkung mit dem Regelsignal U nicht beeinflusst wird.

Das über den Ausgang des Verstärkers V abgegebene entzerrte Signal Sa wird der Spannungsquelle SP zugeführt, die wie ein Gleichrichter in Kombination mit einem Siebglied wirkt und das Signal U erzeugt. Die beiden Dämpfungsglieder DG1 und DG2 besitzen gleiche Strom/Spannungscharakteristiken und die mit diesen Dämpfungsgliedern bewirkten Dämpfungen sind vom Signal U abhängig.

Fig. 2 zeigt eine weitere Schaltungsanordnung zur automatischen Entzerrung eines Signals, bei dem das zu entzerrende Signal Se zuerst dem Regelverstärker RV zugeführt wird und der Ausgang des Regelverstärkers an den Entzerrer ENTZ angeschlossen ist. Es wäre grundsätzlich auch denkbar, den Verstärker V im Anschluss an den Summierer SM anzuordnen, so dass auch im Fall der Fig. 2 das entzerrte Signal Sa vom Ausgang des Verstärkers V abgegeben und der Spannungsquelle SP zugeführt wird. In diesem Fall wäre der Ausgang b des Dämpfungsgliedes DG2 direkt an die beiden Zweige ZW1 und ZW2 angeschlossen.

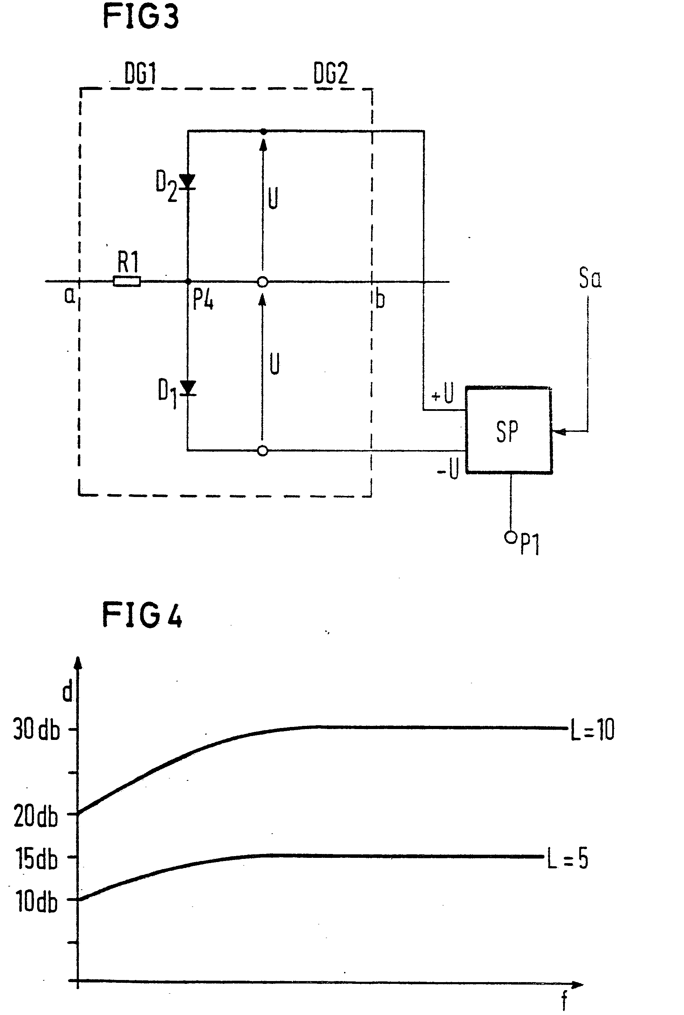

Fig. 3 zeigt Ausführungsbeispiele der Dämpfungsglieder DG1 und DG2. Der Eingang a der Dämpfungsglieder ist über den Widerstand R1 an den Verbindungspunkt P4 der beiden Dioden D1 und D2 angeschlossen. Die Spannungsquelle SP liefert in Abhängigkeit vom entzerrten Signal Sa Spannungen –U bzw. +U, so dass an den beiden Dioden eine Spannung 2U anliegt. Mit dieser Spannung 2U sind die Widerstände der beiden Dioden D1 und D2 änderbar. Die Dioden sind in bezug auf diese Spannung 2U in Durchlassrichtung gepolt. Das Mittelpotential am Eingang a ist gleich einem vorgegebenen Bezugspotential, das am Schaltungspunkt P1 anliegt. Die Spannungen –U bzw. +U liegen symmetrisch zum Bezugspotential. Ein derartiges Bezugspotential kann beispielsweise durch Masse realisiert werden. Das Mittelpotential des über den Ausgang b abgegebenen Signals gleicht ebenfalls dem Bezugspotential.

Je grösser der Strom durch die beiden Dioden D1 und D2 ist, desto mehr wird das über den Eingang a zugeführte Signal gedämpft. Wenn der Pegel des entzerrten Signals Sa kleiner ist als der Sollpegel, dann ist die Spannung 2U relativ klein und das über den Eingang a zugeführte Signal wird relativ wenig gedämpft. Falls eine lange Leitung vorausgesetzt wird und ein relativ kleiner Pegel des zu entzerrenden Signals Se, dann ist bei noch nicht vorgenommener Regelung auch ein relativ kleiner Pegel des Signals Sa anzunehmen. Die Spannungsquelle SP gibt unter dieser Voraussetzung eine relativ kleine Spannung 2U ab, so dass der Strom durch die beiden Dioden relativ klein und die bewirkte Dämpfung gering ist. Der Hochpass HP1 kommt voll zur Wirkung, weil das Dämpfungsglied DG1 nur relativ wenig das Ausgangssignal des Hochpasses dämpft. Auch der Verstärker V kommt voll zur Wirkung, weil das Summensignal Su durch das Dämpfungsglied DG2 nur wenig gedämpft wird. Dabei wird durch den Verstärker V, durch die Spannungsquelle SP und durch das Dämpfungsglied DG2 ein Regelkreis gebildet, wogegen durch den Verstärker V, durch die Spannungsqulle SP, durch das Dämpfungsglied DG1, durch den Summierer SM und durch das Dämpfungsglied DG2 ein Steuerkreis gebildet wird. Nach erfolgter Regelung bzw. Steuerung mit Hilfe des Signals U wird der Pegel des Signals Sa – im Vergleich zum Pegel des zu entzerrenden Signals Se – bei höheren Frequenzen stärker angehoben und es wird der Tiefpasscharakteristik der Leitung entgegengewirkt.

Im Falle einer kurzen Leitung ergibt sich ein Signal Se mit relativ grossem Pegel, so dass vor erfolgter Regelung bzw. Steuerung ein Signal Sa mit relativ grossem Pegel anzunehmen ist. Dieses Signal Sa mit relativ grossem Pegel bewirkt eine relativ grosse Spannung 2U. Auf diese Weise wird einerseits durch die relativ grosse Dämpfung des Dämpfungsgliedes DG1 der Einfluss des Hochpasses HP1 verringert und durch die relativ grosse Dämpfung des Dämpfungsgliedes DG2 wird auch der Einfluss des Verstärkers V verringert. Auf diese Weise wird also bei kurzen Leitungen das Signal Se weniger verstärkt und der Tiefpasscharakteristik weniger entgegengewirkt.

Fig. 4 zeigt Tiefpasscharakteristiken von Leitungen, über die das zu entzerrende Signal Se übertragen wird. Die zwei dargestellten Kurven beziehen sich auf Ortskabel mit einer Leitungslänge L=5 km bzw. L=10 km. Die Charakteristiken zeigen die Abhängigkeit der Dämpfung d von der Frequenz f. Die Dämpfung d ist bei tiefen Frequenzen geringer als bei höheren Frequenzen. Es ist auch ersichtlich, dass die Dämpfung d bei einer grösseren Leitungslänge L=10 grösser ist als bei einer vergleichsweise kleineren Leitungslänge L=5. Die Kurve, betreffend die Leitungslänge L=5 kann aus einem Proportionalanteil von etwa 10 db und einem Tiefpassanteil von etwa 5 db gebildet werden. In vielen Fällen erhöht sich die in db angegebene Dämpfung d linear mit der Leitungslänge L. Im dargestellten Fall erhöht sich mit der doppelten Leitungslänge L=10 auch der Porportionalanteil um den Faktor 2 auf den Wert d=20 db und der Tiefpassanteil auf einen Wert von 10 db.

Die in Fig. 1 und Fig. 2 dargestellten Schaltungsanordnungen haben die Aufgabe, die durch die Leitungen bedingten unterschiedlichen Pegel und das unterschiedliche Tiefpassverhalten zu kompensieren, so dass im Idealfall der Pegel des entzerrten Signals Sa bei allen Frequenzen gleich einem konstanten Sollpegel ist. Grundsätzlich müssten die in Fig. 1 und 2 dargestellten Schaltungsanordnungen auf eine spezielle Leitungscharakteristik eingestellt werden. Nach Berücksichtigung der speziellen Leitungscharakteristik entzerren die in Fig. 1 und 2 dargestellten Schaltungsanordnungen automatisch bei beliebigen Leitungslängen. In der Praxis gleichen sich die Leitungscharakteristiken der handelsüblichen Leitungen weitgehend, so dass mit der in Fig. 1 und 2 dargestellten Schaltungsanordnungen in vielen praktischen Fällen eine automatische Entzerrung bei verschiedenen Leitungen und beliebigen Leitungslängen durchführbar ist.

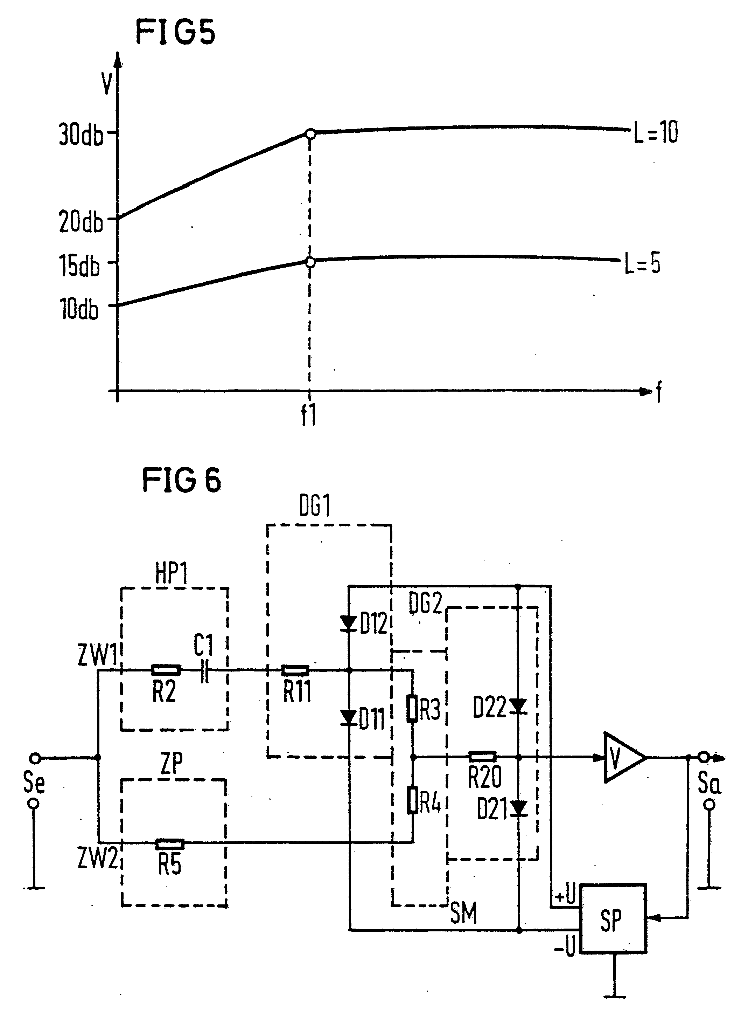

Fig. 5 zeigt zwei Übertragungscharakteristiken der in Fig. 1 dargestellten Schaltungsanordnung unter Voraussetzung der in Fig. 4 dargestellten Leitungscharakteristiken. Die Abszissenrichtung bezieht sich auf die Frequenz f und die Ordinatenrichtung auf die Verstärkung v. Bei tiefen Frequenzen ist eine geringere Verstärkung v erforderlich als bei höheren Frequenzen. Bei grösseren Leitungslängen muss die Verstärkung v grösser sein als bei kleineren Leitungslängen. Die Frequenz f1 ergibt sich durch die Grenzfrequenz des Hochpasses HP1.

Fig. 6 zeigt ein Ausführungsbeispiel der in Fig. 1 dargestellten Schaltungsanordnung. Der Hochpass HP1 wird durch den Widerstand R2 und durch den Kondensator C1 gebildet. Der Zweipol ZP wird durch den Widerstand R5 gebildet. Das Dämpfungsglied DG1 besteht aus dem Widerstand R11 und aus den beiden Dioden D11 und D12. Das Dämpfungsglied DG2 besteht aus dem Widerstand R20 und aus den beiden Dioden D21 und D22. Der Summierer SM wird aus den beiden Widerständen R3, R4 und aus dem Verbindungspunkt dieser beiden Widerstände gebildet.

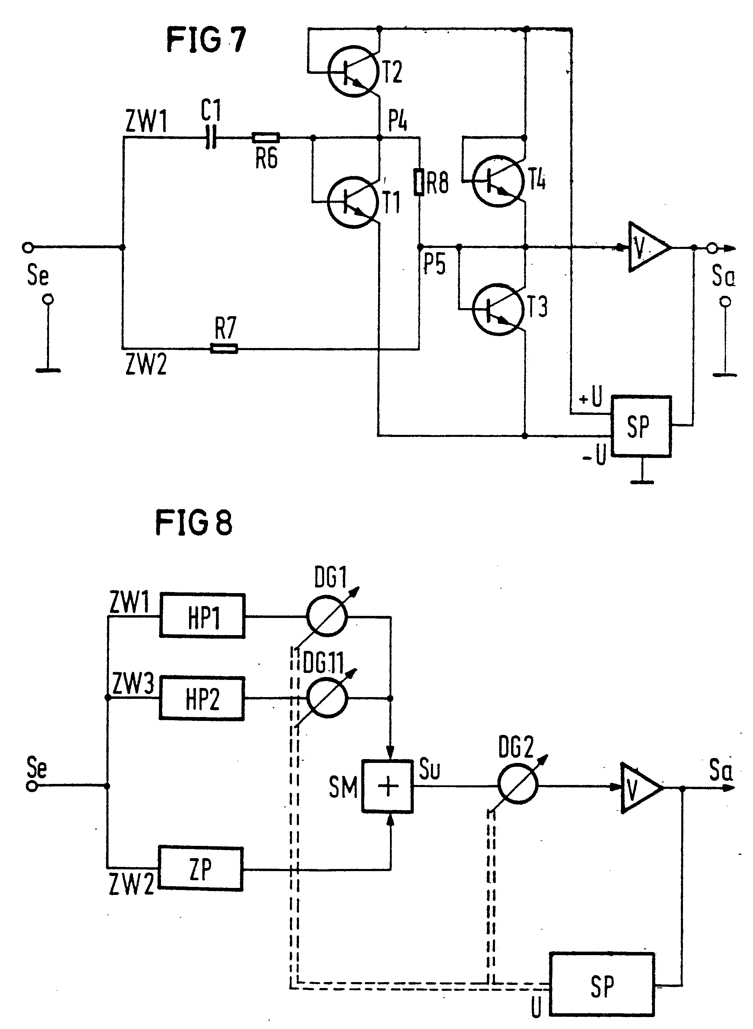

Fig. 7 zeigt ein bevorzugtes Ausführungsbeispiel der in Fig. 1 dargestellten Schaltungsanordnung. Der Hochpass wird durch den Kondensator C1 und durch den Widerstand R6 gebildet. Der Zweipol besteht aus dem Widerstand R7. Ein Dämpfungsglied wird gebildet aus dem Widerstand R6 und aus den beiden Transistoren T1 und T2. Das zweite Dämpfungsglied wird gebildet aus den beiden Widerständen R7, R8 und aus den beiden Transistoren T3 und T4. Der Summierer besteht aus den Widerständen R7, R8 und aus dem Verbindungspunkt P5. Es ist direkt ersichtlich, dass die Widerstände R6, R7, R8 mehrfache Funktionen im Zusammenhang mit dem beschriebenen Hochpass und im Zusammenhang mit den beschriebenen Dämpfungsgliedern erfüllen.

Fig. 8 zeigt eine Schaltungsanordnung, die speziell dann vorteilhaft ist, wenn sich die in Fig. 4 dargestellten Tiefpasscharakteristiken nicht mit Hilfe eines einzigen Hochpasses HP1 kompensieren lassen. Gemäss Fig. 8 sind in einem dritten Zweig ZW3 der Hochpass HP2 und das Dämpfungsglied DG11 in Serie angeordnet. Alle in Fig. 8 dargestellten Dämpfungsglieder DG1, DG2, DG11 haben weitgehend gleiche Strom/Spannungscharakteristiken und werden mit demselben Signal U gesteuert. Diese Dämpfungsglieder können beispielsweise mit Dioden gemäss Fig. 6 oder mit Transistoren gemäss Fig. 7 realisiert werden.

Es wäre auch denkbar, den Zweig ZW3 mit dem Hochpass HP2 und dem Dämpfungsglied DG11 parallel zu dem in Fig. 2 dargestellten Zweig ZW1 anzuordnen.

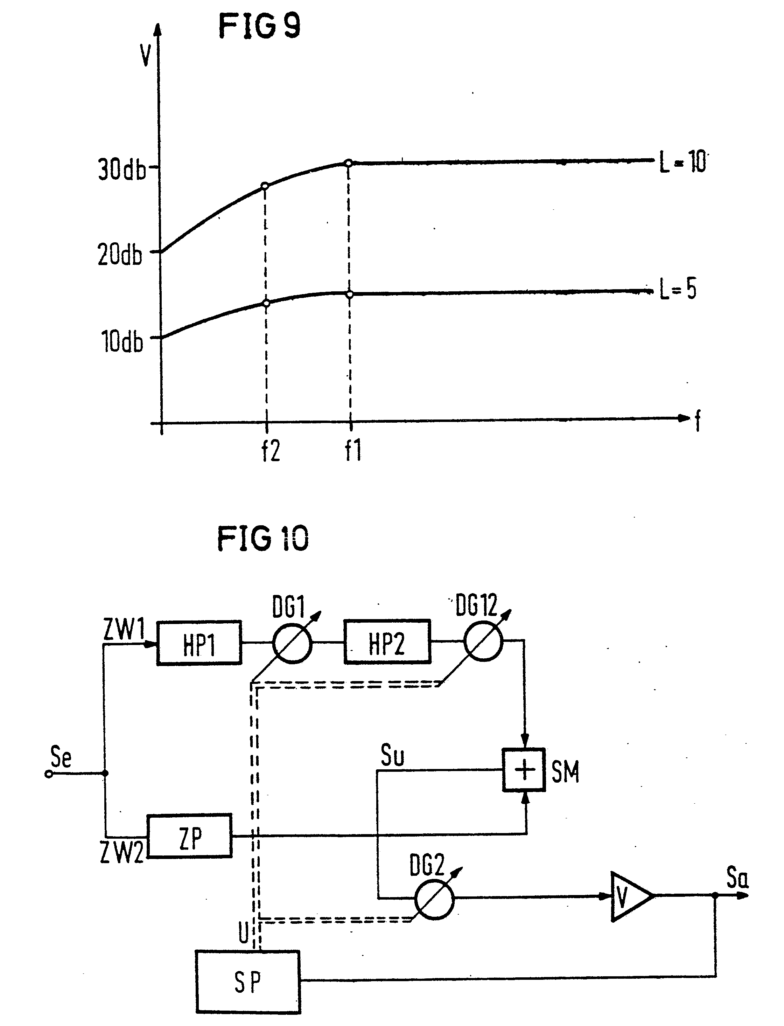

Fig. 9 zeigt Übertragungscharakteristiken der in Fig. 8 dargestellten Schaltungsanordnung unter Voraussetzung verschiedener Leitungslängen L. Dabei ist die Frequenz f1 durch die Grenzfrequenz des Hochpasses HP1 und die Frequenz f2 durch die Grenzfrequenz des Hochpasses HP2 festgelegt. Grundsätzlich wäre es auch denkbar, noch weitere Hochpässe und Dämpfungsglieder parallel und/oder seriell zu schalten und mit ein und demselben Signal U zu regeln bzw. zu steuern.

Fig. 10 zeigt eine Schaltungsanordnung, die sich speziell dann bewährt, falls die Tiefpasscharakteristik der betreffenden Leitung nicht linear mit der Leitungslänge zunimmt. In diesem Fall ist es zweckmässig, im Zweig ZW1 zusätzlich den Hochpass HP2 und das Dämpfungsglied DG12 anzuordnen. Alle Dämpfungsglieder werden wieder mit Hilfe desselben Signals U geregelt bzw. gesteuert. Der Hochpass HP2 und das Dämpfungsglied DG12 könnten auch in Serie zu dem in Fig. 2 dargestellten Dämpfungsglied DG1 angeordnet sein.

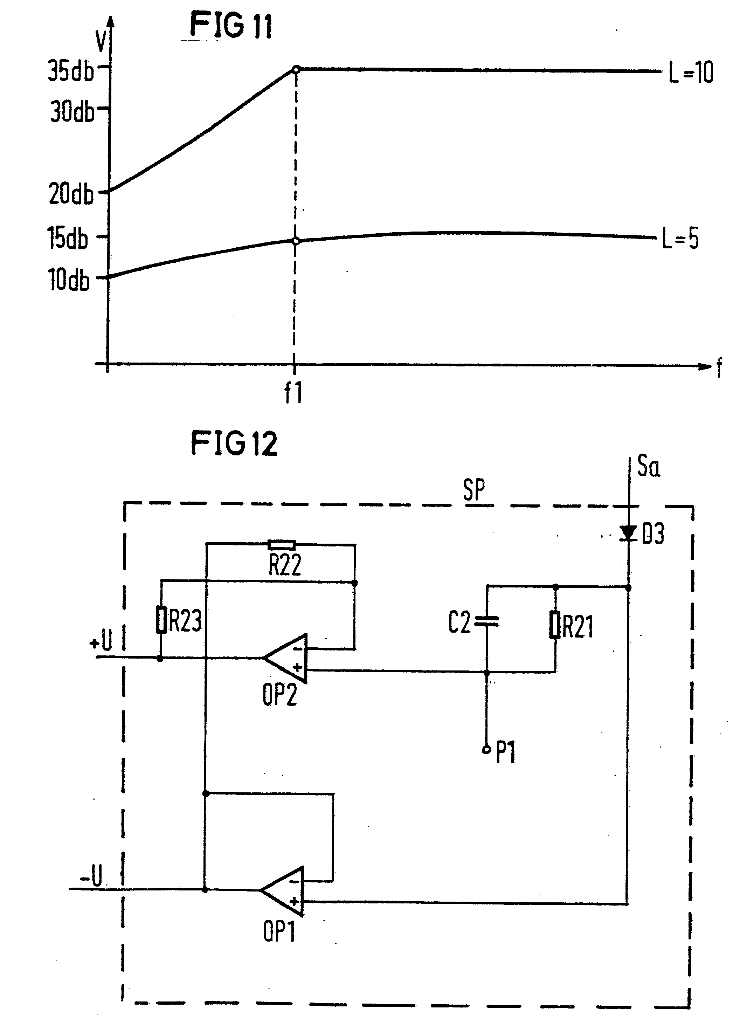

Fig. 11 zeigt Übertragungscharakteristiken der in Fig. 10 dargestellten Schaltungsanordnung. Es wird angenommen, dass sich der Proportionalanteil bei Erhöhung der Leitungslänge von L=5 auf L=10 auf das Doppelte, wie gemäss Fig. 4 erhöht.

Es wurde ferner angenommen, dass sich der Tiefpassanteil bei Erhöhung der Leitungslänge nicht nur um 5 db, sondern auf das Dreifache, um 15 db erhöht. Um derartige Leitungscharakteristiken zu berücksichtigen, bewirkt die in Fig. 10 dargestellte Schaltungsanordnung die in Fig. 11 dargestellten Übertragungscharakteristiken. Es ist ersichtlich, dass bei einer Leitungslänge L=5 ein Proportionalanteil von 10 db und ein Hochpassanteil von 5 db erzielt wird. Es ist ausserdem ersichtlich, dass bei einer Leitungslänge L=10 ein Proportionalanteil von 20 db und ein Hochpassanteil von 15 db erreicht wird.

Fig. 12 zeigt ein Ausführungsbeispiel der in den Fig. 3, 6 und 7 dargestellten Spannungsquelle SP. Die beiden Operationsverstärker OP1 und OP2 haben je einen nichtinvertierenden Kanal, deren Eingänge mit einem Pluszeichen gekennzeichnet sind und haben je einen invertierenden Kanal, deren Eingänge mit einem Minuszeichen gekennzeichnet sind. Das entzerrte Signal Sa wird über die Diode D3 einer Belegung des Kondensators C2 zugeführt. Parallel zu diesem Kondensator C2 liegt der Widerstand R21. Der Ausgang des Operationsverstärkers OP1 ist einerseits an den invertierenden Kanal des Operationsverstärkers OP1 angeschlossen und andererseits über den Widerstand R22 an den Eingang des invertierenden Kanals des Operationsverstärkers OP2. Der nichtinvertierende Kanal des Operationsverstärkers OP2 ist über den Schaltungspunkt P1 an einen Schaltungspunkt konstanten Bezugspotentials angeschlossen.

**Patentansprüche**

1. Schaltungsanordnung zur automatischen Entzerrung eines Signals (Se), das über eine Leitung mit Tiefpasscharakteristik übertragen wurde und einem Entzerrer (ENTZ) mit regelbarem Hochpassfilter und einem dazu in Serie geschalteten Regelverstärker (RV) zugeleitet wird, gekennzeichnet durch die gleichzeitige Anwendung der folgenden Massnahmen:

A) Der Entzerrer (ENTZ) enthält in einem ersten Zweig (ZW1) einen Hochpass (HP1) vorgegebener Frequenzcharakteristik und ein dazu in Serie geschaltetes erstes Dämpfungsglied (DG1) und enthält in einem zweiten Zweig (ZW2) einen Zweipol (ZP) vorgegebener Frequenzcharakteristik; die Signale der beiden Zweige (ZW1, ZW2) werden in einem Summierer (SM) summiert.

B) Der Regelverstärker (RV) besteht aus einem zweiten Dämpfungsglied (DG2) und einem in Serie geschalteten Verstärker (V), der eine vorgegebene Verstärkung bewirkt.

C) Die Strom/Spannungscharakteristiken des ersten und des zweiten Dämpfungsgliedes (DG1, DG2) sind weitgehend gleich und deren Dämpfung ist von einem Signal (U) abhängig, das aus dem entzerrten Signal (Sa) durch Gleichrichtung und Glättung abgeleitet wird (Fig. 1, 2).

2. Schaltungsanordnung nach Anspruch 1, dadurch gekennzeichnet, dass das erste Dämpfungsglied (DG1) und das zweite Dämpfungsglied (DG2) aus je zwei Richtleitern (Dioden D11, D12 bzw. D21, D22, Transistoren T1, T2 bzw. T3, T4) gebildet sind, dass die dem Verbindungspunkt der beiden Richtleiter abgewandten Elektroden an Pole einer Spannungsquelle (SP) angeschlossen sind, deren Potentiale zu einem Bezugspotential symmetrisch sind und an denen eine Spannungsdifferenz auftritt, die vom entzerrten Signal (Sa) abhängig ist und dass die beiden Richtleiter in bezug auf die Spannungsquelle (SP) in Durchlassrichtung gepolt sind (Fig. 6 und 7).

3. Schaltungsanordnung nach Anspruch 1, dadurch gekennzeichnet, dass parallel zum zweiten Zweig (ZW2) ein dritter Zweig (ZW3) vorgesehen ist, in welchem ein weiterer Hochpass (HP2) mit vorgegebener Frequenzcharakteristik in Serie mit einem weiteren Dämpfungsglied (DG11) angeordnet ist, dass der dritte Zweig (ZW3) an den Summierer (SM) angeschlossen ist, der die über den ersten, zweiten und dritten Zweig übertragenen Signale summiert und dass die Strom/Spannungscharakteristik des dritten Dämpfungsgliedes (DG3) weitgehend gleich den Strom/Spannungscharakteristiken des ersten und zweiten Dämpfungsgliedes (DG1, DG2) ist und dessen Dämpfung vom Signal (U) abhängig ist, das aus dem entzerrten Signal (Sa) abgeleitet wird (Fig. 8).

4. Schaltungsanordnung nach Anspruch 1, dadurch gekennzeichnet, dass im ersten Zweig (ZW1) in Serie zum Hochpass (HP1) und zum ersten Dämpfungsglied (DG1) ein zusätzlicher Hochpass (HP2) und ein zusätzliches Dämpfungsglied (DG12) angeordnet sind und dass die Strom/Spannungscharakteristik des zusätzlichen Dämpfungsgliedes (DG12) weitgehend gleich der Strom/Spannungscharakteristik des ersten Dämpfungsgliedes (DG1) ist und mit dem Signal (U) gesteuert wird, das aus dem entzerrten Signal (Sa) durch Gleichrichtung und Glättung abgeleitet wird (Fig. 10).

5. Schaltungsanordnung nach Anspruch 2, dadurch gekennzeichnet, dass die Spannungsquelle (SP) gebildet ist aus einem ersten und zweiten Operationsverstärker (OP1, OP2), aus einem weiteren Richtleiter (D3), aus einem Kondensator (C2) und aus einem ersten, einem zweiten und einem dritten Widerstand (R21, R22, R23), dass das entzerrte Signal (Sa) über den weiteren Richtleiter (D3) einer Belegung des Kondensators (C2) und dem nichtinvertierenden Eingang des ersten Operationsverstärkers (OP1) zugeführt ist, dass die andere Belegung des Kondensators (C2) und der nichtinvertierende Kanal des zweiten Operationsverstärkers (OP2) mit einem Schaltungspunkt (P1) verbunden ist, an dem das Bezugspotential anliegt, dass parallel zum Kondensator (C2) der erste Widerstand (R21) geschaltet ist, dass der invertierende Kanal des ersten Operationsverstärkers (OP1) an den Ausgang dieses ersten Operationsverstärkers (OP1) und an eine der Elektroden der Richtleiter (D11, D21 bzw. T1, T3) angeschlossen ist, dass der Ausgang des ersten Operationsverstärkers (OP1) über einen zweiten Widerstand (R22) an den Eingang des invertierenden Kanals des zweiten Operationsverstärkers (OP2) und von dort über den dritten Widerstand (R23) an den Ausgang des zweiten Operationsverstärkers (OP2) angeschlossen ist und dass der Ausgang des zweiten Operationsverstärkers (OP2) an die Elektrode des anderen Richtleiters (D12, D22 bzw. T2,T4) angeschlossen ist (Fig. 6, 7, 12).

## Claims

1. A circuit arrangement for the automatic distortion correction of a signal (Se) which has been transmitted via a line having a low-pass characteristic and which is fed to a distortion corrector (ENTZ) comprising a controllable high-pass filter and a variable amplifier (RV) connected in series, characterised by the simultaneous provision of the following features:

A) the distortion corrector (ENTZ) has a first branch (ZW1) containing a high-pass filter (HP1) of a predetermined frequency characteristic in series with a first attenuator (DG1), and a second branch (ZW2) containing a two-terminal network of predetermined frequency characteristic, the signals of the two branches (ZW1, ZW2) being added in an adder stage (SM);

B) the variable amplifier (RV) consists of a second attenuator (DG2) connected in series with an amplifier (V) which effects a predetermined amplification; and

C) the current/voltage characteristics of the first attenuator and the second attenuator (DG1, DG2) are substantially identical and provides attenuation dependent upon a signal (U) which is derived from the distortion-corrected signal (Sa) by rectification and smoothing (Fig. 1, 2).

2. A circuit arrangement as claimed in Claim 1, characterised in that both the first attenuator (DG1) and the second attenuator (DG2) are composed of a respective pair of rectifying paths (diodes D11, D12 and D21, D22, respectively, or by transistors T1, T2 and T3, T4 respectively), the electrodes facing away from the junction of the two rectifying paths being connected to the poles of a voltage source (SP) supplying potentials that are symmetrically disposed in relation to a reference potential, and between which there is a voltage difference dependent upon the distortion-corrected signal (Sa), and the two rectifying paths being poled in the forward direction with regard to the voltage source (SP) (Fig. 6 and 7).

3. A circuit arrangement as claimed in Claim 1, characterised in that there is a third branch (ZW3) connected parallel to the second branch (ZW2) and containing a further high pass filter (HP2) having a predetermined frequency characteristic connected in series with a further attenuator (DG11), the third branch (ZW3) being connected to the adder stage (SM) which adds the signals transmitted via the first, second and third branch, and the current/voltage characteristic of the third attenuator (DG3) being substantially identical to the current/voltage characteristics of the first attenuator and the second attenuator (DG1, DG2), and so providing an attenuation dependent upon the signal (U) which is derived from the distortion-corrected signal (Sa) (Fig. 8).

4. A circuit arrangement as claimed in Claim 1, characterised in that the first branch (ZW1) contains an additional high pass filter (HP2) and an additional attenuator (DG12) in series with the high pass filter (HP1) and the first attenuator (DG1) and that the current/voltage characteristic of the additional attenuator (DG12) is substantially identical to the current/voltage characteristic of the first attenuator (DG1) and so is controlled by the signal (U) derived from the distortion-corrected signal (Sa) by rectification and smoothing (Fig. 10).

5. A circuit arrangement as claimed in Claim 2, characterised in that the voltage source (SP) comprises a first operational amplifier and a second operational amplifier (OP1, OP2), a further rectifying path (D3), a capacitor (C2) and first, second and third resistors (R21, R22, R23), the distortion-corrected signal (Sa) being fed via the further rectifying path (D3) to an electrode of the capacitor (C2) and to the non-inverting input of the first operational amplifier (OP1), the other electrode of the capacitor (C2) and the non-inverting channel of the second operational amplifier (OP2) being connected to the circuit point (P1) maintained at the reference potential, the first resistor (R21) being connected in parallel to the capacitor (C2), the inverting channel of the first operational amplifier (OP1) being connected to the output of this first operational amplifier (OP1) and to one of the electrodes of the rectifying path (D11, D21, or T1, T3), the output of the first operational amplifier (OP1) being connected via a second resistor (R22) to the input of the inverting channel of the second operational amplifier (OP2) and from there via the third resistor (R23) to the output of the second operational amplifier (OP2), and the output of the second operational amplifier (OP2) being connected to the electrode of the other rectifying path (D12, D22 or T2, T4) (Fig. 6, 7, 12).

## Revendications

1. Montage pour réaliser la correction automatique de distorsions d'un signal (Se), qui a été transmis par l'intermédiaire d'un conducteur possédant une caractéristique de filtre passe-bas et est envoyé à un correcteur de distorsions (ENTZ) comportant un filtre passe-haut réglable, et à un amplificateur de réglage (RV) branché en série avec ce filtre, caractérisé par la mise en œuvre simultanée des dispositions suivantes:
A) Le correcteur de distorsions (ENTZ) contient, dans une première branche (ZW1), un filtre passe-haut (HP1) possédant une caractéristique de fréquence prédéterminée et un premier organe d'affaiblissement (DG), branché en série avec ce filtre passe-haut, et contient, dans une seconde branche (ZW2), un dipôle (ZP) possédant une caractéristique de fréquence prédéterminée, les signaux des deux branches (ZW1, ZW2) étant additionnés dans un additionneur (SM).
B) L'amplificateur de réglage (RV) est constitué par un second organe d'affaiblissement (DG2) et par un amplificateur (V) branché en série et qui fournit une amplification prédéterminée.
C) Les caractéristiques courant/tension du premier et du second organes d'affaiblissement (DG1, DG2) sont dans une large mesure identiques et leur affaiblissement dépend d'un signal (U), qui est dérivé du signal (Sa), dont les distorsions sont corrigées, par redressement et lissage (fig. 1, 2).

2. Montage selon la revendiction 1, caractérisé par le fait que le premier organe d'affaiblissement (DG1) et le second organe d'affaiblissement (DG2) sont constitués par deux redresseurs (diodes D11, D12 et D21, D22, transistors T1, T2 et T3, T4), que les électrodes, situées à l'opposé du point de liaison des deux redresseurs, sont raccordées à un pôle d'une source de tension (SP), dont les potentiels sont symétriques par rapport à un potentiel de référence et au niveau desquels apparaît une différence de tension qui dépend du signal (Sa), dont les distorsions sont corrigées, et que les deux redresseurs sont polarisés dans le sens direct par rapport à la source de tension (SP) (fig. 6 et 7).

3. Montage selon la revendication 1, caractérisé par le fait qu'il est prévu, en parallèle sur la seconde branche (ZW2), une troisième branche (ZW3) dans laquelle un autre filtre passe-haut (HP2) possédant une caractéristique de fréquence prédéterminée est monté en série avec un autre organe d'affaiblissement (DG11), que la troisième branche (ZW3) est raccordée à l'additionneur (SM), qui réalise l'addition des signaux transmis par l'intermédiaire des première, seconde et troisième branches, et que la caractéristique courant/tension du troisième organe d'affaiblissement (DG3) est dans une large mesure identique aux caractéristiques courant/tension du premier et du second organes d'affaiblissement (DG1, DG2) et dont l'affaiblissement dépend du signal (U) qui est dérivé du signal (Sa), dont les distortions sont corrigées (fig. 8).

4. Montage selon la revendication 1, caractérisé par le fait que dans la première branche (ZW1), en série avec le filtre passe-haut (HP1) et avec le premier organe d'affaiblissement (DG1) sont montés un filtre passe-haut supplémentaire (HP2) et un organe d'affaiblissement supplémentaire (DG12), et que la caractéristique courant/tension de l'organe d'affaiblissement supplémentaire (DG12) est dans une large mesure identique à la caractéristique courant/tension du premier organe d'affaiblissement (DG1) et est commandée par le signal (U) qui est dérivé du signal (Sa), dont les distorsions sont corrigées, par redressement et lissage (fig. 10).

5. Montage selon la revendication 2, caractérisé par le fait que la source de tension (SP) est constituée par un premier et un second amplificateurs opérationnels (OP1, OP2), par un autre redresseur (D3), par un condensateur (C2) et par une première, une seconde et une troisième résistances (R21, R22, R23), que le signal (Sa), dont les distorsions sont corrigées, est envoyé par l'intermédiaire de l'autre redresseur (D3) à une armature du condensateur (C2) et à l'entrée non inverseuse du premier amplificateur opérationnel (OP1), que l'autre armature du condensateur (C2) et le canal non inverseur du second amplificateur opérationnel (OP2) sont reliées à un point de circuit (P1), auquel est appliqué le potentiel de référence, qu'en parallèle sur le condensateur (C2) est branchée la première résistance (R21), que le canal inverseur du premier amplificateur opérationnel (OP1) est raccordé à la sortie de ce premier amplificateur opérationnel (OP1) et à l'une des électrodes des redresseurs (D11, D21 et T1, T3), que la sortie du premier amplificateur opérationnel (OP1) est raccordée à l'entrée du canal inverseur du second amplificateur opérationnel (OP2) et, à partir de là, par l'intermédiaire de la troisième résistance (R23), à la sortie du second amplificateur opérationnel (OP2) et que la sortie du second amplificateur opérationnel (OP2) est raccordée à l'électrode du second redresseur (D12, D22 et T2, T4) (fig. 6, 7, 12).

0 004 054

# FIG1

# FIG2

## FIG 3

## FIG 4

## FIG5

## FIG 6

**FIG 7**

**FIG 8**

0 004 054

FIG 9

FIG 10

17

FIG 11

FIG 12